# EUROPÄISCHE PATENTANMELDUNG

(11) **EP 0 781 019 A2**
(43) Veröffentlichungstag der Anmeldung: **25.06.1997**
(21) Anmeldenummer: 96119712.6
(22) Anmeldetag: 09.12.1996
(51) Int. Cl.: H04M 3/18

(54) **Schaltungsanordnung zum Schutz einer Teilnehmerschaltung eines Fernmeldevermittlungssystems**

(30) Priorität: 21.12.1995 DE 19548063
(71) Anmelder: SIEMENS AKTIENGESELLSCHAFT, 80333 München (DE)
(72) Erfinder: Kok, Jan, Dipl. Ing., 81369 München (DE)

(57) **Zusammenfassung**

Zur Vermeidung von Störeinflüssen auf die Teilnehmerschaltung (SLIC, SLAC) durch das Auftreten von induktiven Überspannungen beim Schalten der Rufspannungsquelle (UGR) ist zwischen den Adern (a, b) der Teilnehmeranschlußleitung eine Zweiwegschwellwertschaltung mit symmetrischer Durchlaß-Sperrcharakteristik geschaltet, deren Schwellwertspannung größer ist als die Spitzenspannung der Rufspannungsquelle.

## Beschreibung

Die Erfindung betrifft eine Schaltungsanordnung zum Schutz einer Teilnehmerschaltung gemäß dem Oberbegriff des Patentanspruches 1.

Sie steht demnach mit einer Teilnehmeranschlußleitung in Zusammenhang, an die zur Anrufsignalisierung über einen elektromechanischen oder elektronischen Schalter unter gleichzeitiger Abtrennung von der Teilnehmerschaltung erdunsymmetrisch eine Rufspannungsquelle anschaltbar ist. Man spricht in diesem Falle der externen Rufeinspeisung auch vom sogenannten asymmetrischen Ruf.

Moderne Teilnehmeranschlußschaltungen sind aus höchst- integrierten Bausteinen aufgebaut und benötigen eine Schutzschaltung gegen Überspannungen. Solche Überspannungen können aufgrund von induktiven und kapazitiven Kopplungen zu in der Nachbarschaft verlaufenden Leitungen, durch direkte Netzberührung der Teilnehmeranschlußleitung oder aber durch atmosphärische Entladungen entstehen.

Es sind aus diesem Grunde Überspannungsschutzschaltungen vorgesehen, die zwischen den Adern der Teilnehmeranschlußleitung angeschlossen sind und im Überspannungsfall eine niederohmige Ableitung gegen Erdpotential bewirken. Ihre Anschaltpunkte müssen so liegen, daß sie von der Rufspannungsquelle im Anschaltefall nicht beaufschlagt werden können, da die Spitzenwerte der Rufspannung sie sonst zum Ansprechen bringen würden.

Neben den erwähnten Überspannungen sind auch Störspannungen zu berücksichtigen, die durch das Schalten induktiver Lasten zustandekommen. Hierzu kommt es, wenn im Zusammenhang mit der Rufsignalisierung beim Übergang von der Rufphase, in der die Teilnehmeranschlußleitung von der Teilnehmerschaltung abgetrennt und an den Rufgenerator gelegt ist, zur Rufpause bzw. am Rufende eine Wiederanschaltung der Teilnehmeranschlußleitung unter gleichzeitiger Abtrennung des Rufsignalgenerators erfolgt. Die dabei entstehenden Überspannungen können zu Funktionsstörungen der Bestandteile der Teilnehmeranschlußschaltung oder anderen Einheiten des Fernmeldesystems führen.

Es ist bekannt, solche Störungen durch das Schalten von Ruflasten dadurch gering zu halten, daß mittels Detektorschaltungen der Nulldurchgang des Rufstroms ermittelt und die Abschaltung der Ruflast gezielt zu diesem Zeitpunkt vorgenommen wird.

Solche Detektorschaltungen können aber keinen vollständigen Schutz gegen Störspannungen beim Schalten induktiver Lasten bieten. Das hängt zum einen damit zusammen, daß die Nulldurchgangsbestimmung toleranzbehaftet ist und zum anderen damit, daß die zum Schalten verwendeten Relais Verzögerungszeiten in der Größenordnung von 8 bis 10 ms aufweisen mit der Folge, daß das Schalten nicht exakt zum Zeitpunkt des ermittelten Nulldurchgangs erfolgt, so daß selbst dann, wenn dieser richtig ermittelt sein sollte, es zum Entstehen beträchtlicher Spannungen kommt, die in der Größenordnung bis zu einigen kV liegen können.

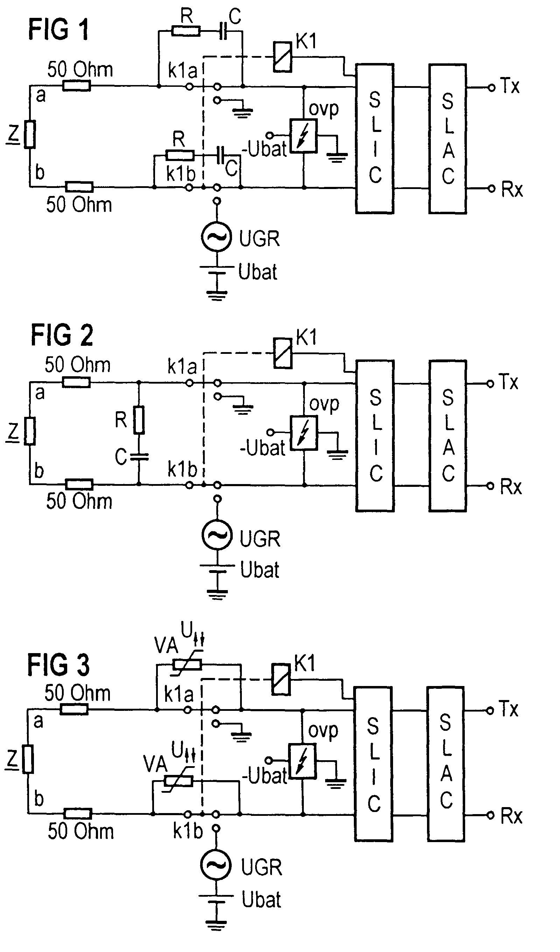

Es sind daher schon eine Reihe zusätzlicher Schaltmaßnahmen getroffen worden, um die Störungen bei Schalten induktiver Ruflasten im Zusammenhang mit der Rufsignalisierung zu verringern, worauf nachstehend anhand der Figuren 1 bis 4 eingegangen wird.

In der Figur 1 ist eine Teilnehmerschaltung in Form der Bausteine SLIC und SLAC veranschaulicht. Der Baustein SLIC (Subscriber Line Interface Circuit) stellt im wesentlichen die Schnittstelle zur Teilnehmeranschlußleitung dar, wogegen im Baustein SLAC (Subscriber Line Audio Circuit)im wesentlichen die Realisierung des Zweidraht-Vierdraht-Übergangs, der Analog-Digital-Wandlung bzw. Digital-Analog-Wandlung und der Filterung erfolgt.

An diese Teilnehmerschaltung ist die Teilnehmeranschlußleitung mit ihren Adern a und b angeschlossen, die der Verbindung mit einem Teilnehmerendgerät bzw. deren Impedanz dient, was hier durch eine Impedanz Z angedeutet ist. Die hier noch dargestellten Widerstände Ra und Rb, die einen Widerstandswert von beispielsweise 50 Ohm aufweisen, gehören zur Teilnehmerschaltung und dienen der Strombegrenzung.

Ein Relais K1 mit einem in der a-Ader der Teilnehmeranschlußleitung liegenden Umschaltekontakt k1a und einem in der b-Ader liegenden Umschaltekontakt k1b dient der Anschaltung eines Rufstromgenerators UGR, der in der Rufphase in Serienschaltung zur Speisespannungsquelle UB asymmetrisch an die a-Ader und die b-Ader gelegt wird.

Als Schutz gegen die vorerwähnten beispielsweise durch atmosphärische Störungen bedingten Überspannungen dient eine Überspannungsschutzschaltung OVP, die auf der dem Baustein SLIC zugewendeten Seite der Kontakte k1a, k1b des Relais K1 zwischen den Adern a und b der Teilnehmeranschlußleitung angeschaltet ist und zwei symmetrische Ableitpfade von diesen Adern nach Massepotential bildet. Aufgrund des Anschalteortes ist gewährleistet, daß diese Schaltung nicht durch die angelegte Rufspannung zum Ansprechen kommen kann.

Die Überspannungen, um deren Unterdrückung es hier geht, kommen bei der Wiederanschaltung der Teilnehmeranschlußleitung an die Teilnehmerschaltung mit Hilfe des Relais K1 zustande, nachdem diese während der Rufphase davon abgetrennt und mit dem Stromkreis des Rufgenerators UGR verbunden war.

In der Figur 1 sind nun als Entstörmaßnahmen RC-Glieder (Widerstand R, Kondensator C) über den Relaiskontakten k1a und k1b angeschaltet. Es handelt sich hier um eine Lösung, die vier Bauelemente je Teilnehmeranschlußschaltung, d. h. je Teilnehmer erfordert, wobei von den Kondensatoren C der RC-Glieder eine hohe Spannungsfestigkeit gefordert werden muß. Nachteilig bei dieser Schaltmaßnahme ist außerdem, daß die Energie der Überspannungen über die Überspannungsschutzschaltung OVP gegen Erde/Batterie abgeleitet wird, was wegen der galvanischen Kopplung mit anderen Funktionseinheiten bzw. der digitalen Einheit der Teilnehmerschaltung selbst über den Masseanschluß unerwünscht ist.

Bei der Lösung gemäß Figur 2 ist zur Störunterdrückung ein RC-Glied (Widerstand R, Kondensator C) zwischen den Adern a und b der Teilnehmeranschlußleitung angeschaltet. Es sind hier zwar lediglich zwei Bauelemente pro Teilnehmerschaltung erforderlich und es entfällt auch die oben angegebene Verkopplung über den Masseanschluß. Da hier aber die abzuleitende Energie in der Lastinduktivität im Kondensator C des RC-Gliedes gespeichert werden muß, läßt sich diese Lösung nur im Zusammenhang mit der oben erwähnten Abschaltung während des Rufstromnulldurchgangs und mit Relais mit gegen Null gehenden Schaltverzögerungszeiten einsetzen, da sonst ein Kondensator mit unrealisierbarem großem Kapazitätswert erforderlich würde. Diese Lösung ist also nicht kostengünstig und benötigt einen hohen Platzbedarf. Hinzukommt, daß Relais mit derart kurzen Verzögerungszeiten nicht existiern.

Bei der bekannten Lösung gemaß Figur 3 sind den Kontakten k1a und k1b Varistoren VA parallel geschaltet. Es sind also lediglich zwei Bauelemente pro Teilnehmerschaltung erforderlich, aber auch hier erfolgt eine Ableitung der in der Induktivität gespeicherten Energie über die Überspannungsschutzschaltung OVP nach Masse/Batterie. Hinzu kommt, daß Varistoren nach Überspannungsbeeinflussungen, beispielsweise durch die vorerwähnten atmosphärischen Störungen, ihre ursprünglichen Kennwerte undefiniert verändern, was insbesondere im Hinblick auf die angestrebte Symmetrie der Leitungsaderzweige unzulässig ist. Diese Eigenart der Varistoren erlaubt es auch nicht, bei der Schutzschaltung gemä Fig. 2 das RC-Glied durch einen Varistor zu ersetzen.

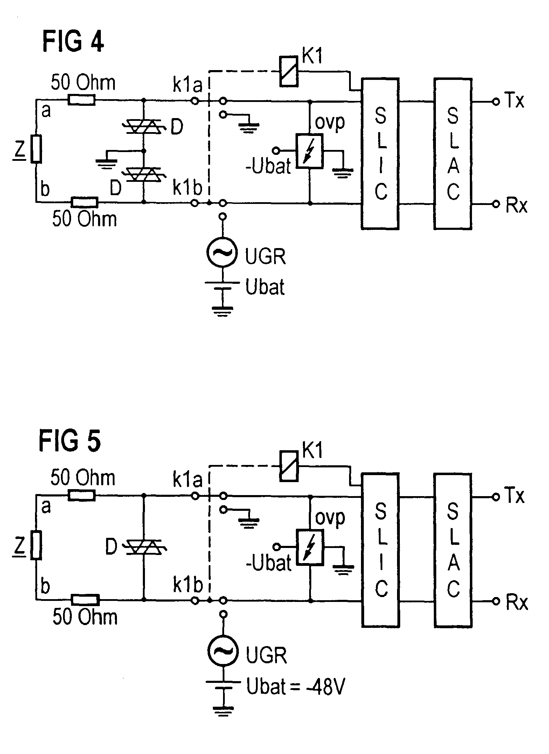

Die gemäß Figur 4 verwendete bekannte Schutzmaßnahme besteht in der Anschaltung der Reihenschaltung zweier Diacs zwischen den Adern a und b, wobei der Verbindungspunkt der beiden Diacs an Masse liegt. Diese Schaltung ist als Schutzschaltung für den Rufspannungsgenerator UGR gegen Überspannungen wie die beispielsweise erwähnten atmosphärischen Störungen vorgesehen, sie hat jedoch auch die Wirkung, daß sie bei Umschaltung des Relais noch in der Induktivität der Teilnehmeranschlußleitung bzw. des Teilnehmerendgerätes vorhandene Energie nach Systemmasse ableitet, was jedoch die vorerwähnte unerwünschte galvanische Kopplung des Störstromes auf weitere elektronische Funktionseinheiten ermöglicht.

Die Aufgabe der Erfindung besteht darin, eine kostengünstige Lösung zur Unterdrückung von Störspannungen im Zusammenhang mit dem Schalten induktiver Ruflasten anzugeben, die die Nachteile der vorerwähnten bekannten Lösungen nicht aufweist.

Diese Aufgabe wird durch die Merkmale des Patentanspruchs 1 gelöst.

Es wird demnach zwischen den Adern der Teilnehmeranschlußleitung eine Zweiwegschwellwertschaltung mit symmetrischer Durchlaß-Sperrcharakteristik angeschaltet, deren Schwellwertspannung größer ist als die Spitzenspannung der Rufspannungsquelle.

Gegenüber den vorstehend diskutierten bekannten Lösungen bringt dies zum einen den Vorteil, daß die in der induktiven Last gespeicherte Energie nicht über Masse/Batterie abgeleitet wird und damit auch nicht die erwähnten unerwünschten galvanischen Kopplungen zustandekommen. Die erfindungsgemäße Lösung kann ferner mit einem einzigen Bauteil realisiert werden.

Durch die erfindungsgemäße Schaltungsanordnung werden die übertragungstechnischen Parameter, insbesondere die Leitungssymmetrie nicht nachteilig beeinflußt. Detektorschaltungen zur Erkennung der Nulldurchgänge sind bei Einsatz der erfindungsgemäßen Schaltungsanordnung entbehrlich.

Gemäß weiterer Ausgestaltung der Erfindung kann die Zweiwegschwellwertschaltung in Form eines Diacs realisiert werden. Solche Bauelemente stehen in Technologien zur Verfügung (SMD-Surface Mount Device), die den hohen fertigungstechnischen Anforderungen beim Zusammenbau genügen, insbesondere was die Lötbarkeit anbelangt, was bei Schutzschaltungen, die Kondensatoren verwenden, nicht ohne weiteres der Fall ist. Auch den hohen Anforderungen bei Blitzbeanspruchung werden solche Diacs gerecht.

Alternativ kommen stattdessen auch zwei antiseriell geschaltete Dioden mit definierter Durchbruchspannung in Frage.

In der Figur 5 der Zeichnung ist ein Ausführungsbeispiel der erfindungsgemäßen Schaltungsanordnung dargestellt, wobei als Zweiwegschwellwertschaltung ein Diac D zur Anwendung kommt, der auf der Teilnehmerseite der Relaiskontakte k1a, k1b des Relais K1 zwischen den Adern a und b der Teilnehmeranschlußleitung angeschlossen ist. Bei Wiederanschalten der Teilnehmeranschlußleitung an die Teilnehmeranschlußschaltung werden die Schaltstrecken des Diac D durch die dabei entstehende Überspannung in den niederohmigen Zustand gesteuert, sodaß sich die in der induktiven Last der Teilnehmeranschlußleitung gespeicherte Energie in der über den Diac geschlossene Schleife abbauen kann.

## Patentansprüche

1. Schaltungsanordnung zum Schutz einer Teilnehmerschaltung eines Fernmeldevermittlungssystems für den erdsymmetrischen Anschluß einer Teilnehmeranschlußleitung, an die zur Anrufsignalisierung über einen elektromechanischen oder elektronischen Schalter unter gleichzeitiger Abtrennung von der Teilnehmerschaltung erdunsymmetrisch eine Rufspannungsquelle anschaltbar ist, gegen beim Wiederanschalten an die Teilnehmeranschlußschaltung auftretende induktive Überspannungen,
**gekennnzeichnet durch** eine zwischen den Adern (a, b) der Teilnehmeranschlußleitung angeschaltete Zweiwegschwellwertschaltung (D) mit symmetrischer Durchlaß-Sperrcharakteristik, deren Schwellwertspannung größer ist als die Spitzenspannung der Rufspannungsquelle (UGR).

2. Schaltungsanordnung nach Anspruch 1,
**dadurch gekennzeichnet**, daß als Zweiwegschwellwertschaltung ein Diac (D) verwendet wird.

3. Schaltungsanordnung nach Anspruch 1,
**dadurch gekennzeichnet**, daß als Zweiwegschwellwertschaltung zwei antiseriell geschaltete Dioden verwendet werden.
